(19) **Europäisches Patentamt / European Patent Office / Office européen des brevets**

(11) **EP 4 434 667 A1**

(12) **EUROPEAN PATENT APPLICATION**
published in accordance with Art. 153(4) EPC

(43) Date of publication:
**25.09.2024  Bulletin 2024/39**

(51) International Patent Classification (IPC):
**B23K 11/11** (2006.01)    **B23K 11/16** (2006.01)
**B23K 11/24** (2006.01)    **C22C 21/02** (2006.01)

(21) Application number: **23774279.6**

(22) Date of filing: **08.02.2023**

(52) Cooperative Patent Classification (CPC):
**B23K 11/11; B23K 11/16; B23K 11/24; C22C 21/02**

(86) International application number:
**PCT/JP2023/004140**

(87) International publication number:
**WO 2023/181680 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.03.2022   JP 2022049830**

(71) Applicant: **JFE Steel Corporation**
**Tokyo 100-0011 (JP)**

(72) Inventors:
• **KAWABE, Nao**
 **Tokyo 100-0011 (JP)**
• **KIM, Jingeum**
 **Tokyo 100-0011 (JP)**
• **TAKASHIMA, Katsutoshi**
 **Tokyo 100-0011 (JP)**
• **MATSUDA, Hiroshi**
 **Tokyo 100-0011 (JP)**

(74) Representative: **Haseltine Lake Kempner LLP**
**Bürkleinstrasse 10**
**80538 München (DE)**

(54) **RESISTANCE SPOT-WELDED JOINT AND METHOD FOR PRODUCING SAME**

(57)    It is an object to provide a resistance spot welded joint and a method for producing the welded joint. The resistance spot welded joint of the invention includes two or more steel sheets including at least one steel sheet having a tensile strength of 980 MPa or more. The largest total area fraction of tempered martensite, tempered bainite, and retained austenite in a steel sheet microstructure of a steel sheet among the total area fractions in the steel sheets is defined as Xmax, and a region in the heat-affected zone of the resistance spot weld formed in the steel sheet with Xmax is defined as a first region. The heat-affected zone microstructure in the first region includes ferrite at an area fraction of 40% or less and one or two or more remaining microstructures selected from tempered martensite, tempered bainite, and retained austenite, and the first region has a width D (mm) satisfying formula (1).

$$D \geq 2.40 \times \exp(-0.025 \times Xmax) \qquad (1)$$

FIG. 1

EP 4 434 667 A1

## Description

Technical Field

The present invention relates to a resistance spot welded joint and a method for producing the same.

Background Art

Resistance spot welding is widely used for the assembly of bodies of automobiles etc. Resistance spot welding is performed at as many as several thousand points on a single vehicle body. In resistance spot welding, two or more steel sheets are disposed so as to overlap each other to obtain a sheet set, and the sheet set is held between a pair of upper and lower welding electrodes and energized under the application of pressure. A nugget having a prescribed size is thereby formed in a joint portion of the steel sheets, and the steel sheets are joined together to obtain a welded joint.

In recent years, from the viewpoint of environmental protection, there has been a demand to reduce $CO_2$ emissions from automobiles. High strength steel sheets with reduced thicknesses are being used for vehicle bodies to reduce the weight of the vehicle bodies, i.e., to improve the fuel economy. However, high strength steel sheets are generally strengthened by adding not only a large amount of C but also various alloying elements, and therefore their susceptibility to hydrogen embrittlement is high. In a weld of a welded joint formed using high strength steel sheets, thermal shrinkage during the cooling process causes tensile residual stress. Moreover, during welding, hydrogen may be introduced into the weld metal from coated layers on the steel sheet surfaces and from oil and water on the steel sheet surfaces, or hydrogen may enter the weld from the use environment (e.g., an acidic environment).

One problem that occurs when high strength steel sheets are resistance-spot-welded to form a welded joint is delayed fracture in the weld that is caused by intrusion of hydrogen into a weld metal with high susceptibility to hydrogen embrittlement during the welding.

Examples of a method for preventing the delayed fracture include those in Patent Literature 1 and Patent Literature 2. Patent Literature 1 discloses a technique for preventing delayed fracture by increasing the welding force immediately after welding energization (primary energization) and reducing the current to control the residual stress in the weld. Patent Literature 2 discloses a technique for preventing the delayed fracture by appropriately controlling the welding force during energization to reduce the intrusion of hydrogen into the weld caused by oil on the steel sheet surfaces during welding.

Citation List

Patent Literature

   PTL 1: Japanese Unexamined Patent Application Publication No. 2015-93282
   PTL 2: Japanese Unexamined Patent Application Publication No. 2020-49541

Summary of Invention

Technical Problem

However, in Patent Literature 1, no consideration is given to the influence of hydrogen that causes the delayed fracture. In Patent Literature 2, the amount of hydrogen entering the weld during welding can be reduced. However, no consideration is given to the intrusion of hydrogen into the weld later in the use environment, and delayed fracture may occur in the use environment after the welding.

In resistance spot welding using high strength steel sheets, it is necessary to reduce the amount of hydrogen remaining in the resistance spot weld in order to prevent delayed fracture.

The present invention has been made in view of the foregoing circumstances, and it is an object to provide a resistance spot welded joint in which the occurrence of delayed fracture during welding and in a hydrogen-intrusion environment after welding can be prevented and to provide a method for producing the resistance spot welded joint.

Solution to Problem

To achieve the foregoing object, the present inventors have conducted extensive studies on the delayed fracture resistance of resistance spot welds in welded joints formed using high strength steel sheets.

The delayed fracture of resistance spot welds often occurs from edge portions of the nuggets as a starting point. Therefore, the inventors have thought that, when the intrusion of hydrogen into the nugget serving as a fracture origin can be reduced, the occurrence of delayed fracture can be prevented.

Various weld microstructures are formed in a resistance spot weld because of the influence of thermal cycles during welding. The forms of the weld microstructures formed differ depending on the steel sheet microstructures of the steel sheets welded and their chemical compositions. When the welded steel sheets include a high strength steel sheet, weld microstructures such as a nugget that is a microstructure formed as a result of melting and solidification, a hard portion that is a microstructure having a hardness equal to or more than the hardness of the nugget, and a soft portion that is a microstructure having a hardness less than the hardness of the nugget are generally formed in the high strength steel sheet. These weld microstructures have not only different mechanical properties but also different characteristics such as hydrogen storage capacity and hydrogen permeability.

Hydrogen entering a resistance spot weld diffuses under the influence of the hydrogen storage capacity of each microstructure and its hydrogen permeability, accumulates in an edge portion of the nugget serving as a delayed fracture initiation point, and may cause delayed fracture. Therefore, the amount of hydrogen accumulated in the edge portion of the nugget may vary depending not only on the properties of the microstructure in the nugget but also on the properties of the microstructures in the heat-affected zone (the microstructures of the hard portion and the soft portion).

Accordingly, the inventors have examined the influence of the state of the microstructures formed in the heat-affected zone on the delayed fracture characteristics. Then the inventors have found that, by appropriately controlling the microstructures in a region extending from a softest portion of the heat-affected zone to the base material (i.e., a first region described later), delayed fracture of the resistance spot weld can be prevented.

The present invention has been made based on the above findings and is summarized as follows.

[1] A resistance spot welded joint including a resistance spot weld formed by resistance-spot-welding two or more steel sheets,

wherein at least one of the steel sheets has a tensile strength of 980 MPa or more,
wherein, in each of the steel sheets, the total area fraction of tempered martensite, tempered bainite, and retained austenite in a steel sheet microstructure is denoted as X(%), wherein the total area fraction X(%) in one of the steel sheets that is the largest among the total area fractions X(%) in the steel sheets is defined as Xmax(%),
wherein a region that extends from a softest portion of a heat-affected zone of the resistance spot weld formed in the steel sheet with Xmax to a base material is defined as a first region,
wherein a heat-affected zone microstructure in the first region includes ferrite at an area fraction of 40% or less and one or two or more remaining microstructures selected from tempered martensite, tempered bainite, and retained austenite, and
wherein the first region has a width D (mm) satisfying formula (1):

$$D \geq 2.40 \times \exp(-0.025 \times Xmax). \qquad (1)$$

[2] The resistance spot welded joint according to [1], wherein, in each of the steel sheets, Ceq represented by formula (4) is 0.25% or more:

$$Ceq = C + Si / 30 + Mn / 20 + 2P + 4S, \qquad (4)$$

where element symbols in formula (4) represent the contents (% by mass) of respective elements.

[3] A method for producing the resistance spot welded joint according to [1] or [2],

the method including: a preparation step of disposing the two or more steel sheets so as to overlap each other to prepare a sheet set; and a resistance spot welding step of holding the sheet set between a pair of welding electrodes and energizing the sheet set under application of pressure to form the resistance spot weld,
wherein the resistance spot welding step includes a primary energization step and a secondary energization step,
wherein, in the secondary energization step, the sheet set is energized under conditions in which a current value Ip (kA) and an energization time tp (ms) satisfy formula (2) and formula (3), respectively:

$$0.4 \times Im \leq Ip \leq 1.1 \times Im, \qquad (2)$$

$$1000 - (8 \times Xmax) \leq tp, \qquad (3)$$

where Im in formula (2) is a current value (kA) in the primary energization step, and Xmax in formula (3) is X(%) in one of the steel sheets that is the largest among the total area fractions X(%) in the steel sheets, X(%) in each steel sheet being the total area fraction of tempered martensite, tempered bainite, retained austenite in the steel sheet microstructure of the each steel sheet.

[4] The method for producing the resistance spot welded joint according to [3], the method further including, after the primary energization step, a cooling step,
wherein, in the cooling step, a non-energization state is maintained for 20 ms or longer and 1000 ms or shorter. Advantageous Effects of Invention

According to the present invention, a resistance spot welded joint can be obtained in which, even when a high strength steel sheet is used for the resistance spot welding, the occurrence of delayed fracture during the welding and in a hydrogen-intrusion environment after the welding can be prevented. Moreover, a production method for obtaining the resistance spot welded joint can be provided, so that industrially significant effects are achieved. Brief Description of Drawings
[Fig. 1] Fig. 1 shows a cross-sectional view of a resistance spot welded joint in one embodiment of the invention and a graph showing the Vickers hardness of the resistance spot weld of the resistance spot welded joint.
[Fig. 2] Fig. 2 is an illustration showing a test piece welded by resistance spot welding in an Example of the invention.
[Fig. 3] Fig. 3 is a cross-sectional view showing measurement positions of the hardness of a resistance spot welded joint in an Example of the invention.

Description of Embodiments

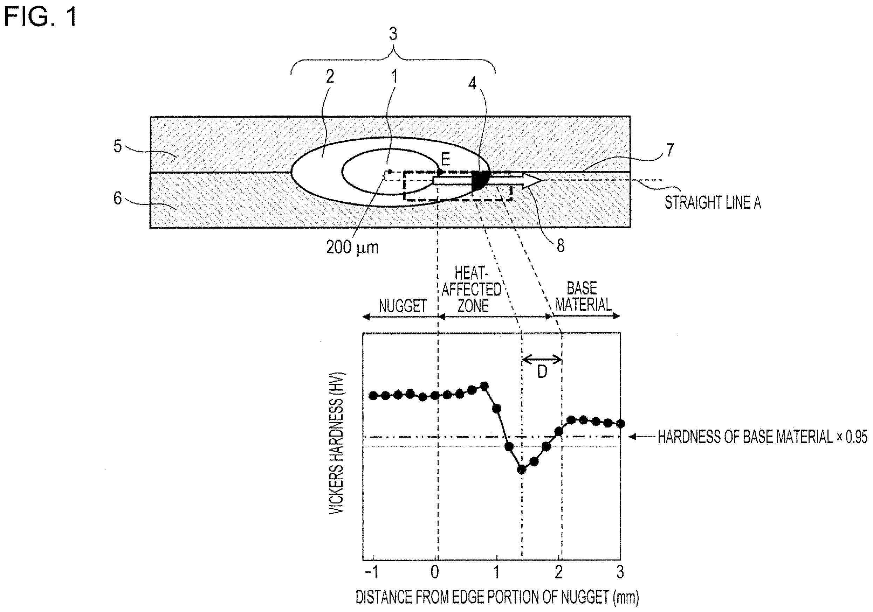

The resistance spot welded joint of the invention and a production method therefor will be described with reference to the drawings. However, the present invention is not limited to the following embodiments.
Referring first to Fig. 1, the resistance spot welded joint of the invention will be described.
Fig. 1 shows a thicknesswise cross-sectional view of a resistance spot welded joint in one embodiment of the invention and a graph showing the relation between the distance from an edge portion of a nugget and the Vickers hardness in a specific region in the resistance spot weld of the resistance spot welded joint. In the example shown in Fig. 1, the resistance spot welded joint is obtained by resistance-spot-welding two steel sheets.
The resistance spot welded joint of the invention (hereinafter referred to the "welded joint") has a resistance spot weld formed by resistance-spot-welding two or more steel sheets. As shown in Fig. 1, the resistance spot weld 3 is formed between overlapping steel sheets 5 and 6.

[Steel sheets]

<Tensile strength>

The "two or more steel sheets" include at least one steel sheet having a tensile strength of 980 MPa or more (which may be hereinafter referred to also as a "high strength steel sheet"). As described above, when a steel sheet having a tensile strength of 980 MPa or more is used, delayed fracture in the resistance spot weld (hereinafter may be referred to also as the "weld") is likely to be a problem. As the number of steel sheets having a tensile strength of 980 MPa or more increases, the delayed fracture time problem is more likely to occur. Therefore, the effects of the invention are significant when one half or more of the two or more steel sheets are steel sheets having a tensile strength of 980 MPa or more.

<Equivalent carbon content>

No particular limitation is imposed on the chemical composition of each of the steel sheets used for the "two or more steel sheets." However, as described above, a large amount of C and various alloy elements are generally added to the high strength steel sheet in order to increase the strength. Since the susceptibility of the high strength steel sheet to hydrogen embrittlement is high, the occurrence of delayed fracture becomes more problematic.
Accordingly, in the present invention, it is preferable to use steel sheets in which Ceq (equivalent carbon content) represented by the following formula (4) is 0.25% or more.

$$Ceq = C + Si / 30 + Mn / 20 + 2P + 4S \qquad (4)$$

Here, the element symbols in formula (4) represent the contents (% by mass) of the respective elements.

With the steel sheets in which the equivalent carbon content represented by formula (4) is 0.25% or more, the susceptibility of the weld to hydrogen embrittlement is high, and the effects of the invention (i.e., prevention of the occurrence of delayed fracture) can be obtained more significantly. The equivalent carbon content is preferably 0.30% or more. In the present invention, no particular limitation is imposed on the upper limit of the equivalent carbon content. However, with steel sheets whose susceptibility to hydrogen embrittlement is excessively high, the effects of the invention may not be easily obtained in some cases. Therefore, the equivalent carbon content is preferably 0.55% or less.

<Coated steel sheet>

All or part of the steel sheets used for the "two or more steel sheets" may each be a coated steel sheet subjected to coating treatment so as to have a coated layer formed on the surface of the base material. Examples of the type of coating on the coated steel sheet include Zn-based coatings and Al-based coatings. Examples of the Zn-based coatings include coated layers such as hot-dip galvanized (GI) coatings, Zn-Ni-based coatings, and Zn-Al-based coatings. Examples of the Al-based coatings include coated layers such as Al-Si-based coatings (e.g., Al-Si-based coatings containing 10 to 20% by mass of Si). A hot-dip coated layer and also an alloyed hot-dip coated layer may be used. Examples of the alloyed hot-dip coated layer include hot-dip galvannealed (GA) layers.

In the present invention, no particular limitation is imposed on the upper limit of the number of overlapping steel sheets so long as the number is two or more. In consideration of the ease of welding, the number of steel sheets is 4 or less.

No particular limitation is imposed on the thickness of each of the "two or more steel sheets." Preferably, the thickness is within the range of, for example, 0.5 mm or more and 2.0 mm or less. Steel sheets with a thickness in the above range can be preferably used for automobile members.

The "two or more steel sheets" may be the same or different. Specifically, two or more steel sheets of the same type and having the same shape may be used, or two or more steel sheets of different types and having different shapes may be used.

A sheet set prepared by disposing two or more such steel sheets so as to overlap each other is resistance-spot-welded to form a welded joint. In the present invention, the weld microstructure of the resistance spot weld in the welded joint is appropriately controlled as described below.

[Resistance spot weld]

As shown in Fig. 1, the weld 3 includes a nugget 1 and a heat-affected zone 2 disposed outside the nugget 1. The microstructure of the heat-affected zone includes a region called a soft portion whose hardness is equal to or less than the hardness of the base material. In the welded joint of the invention, it is important to appropriately control the microstructure of the soft portion as described below.

In each of the "two or more steel sheets" (i.e., the overlapping steel sheets), the total area fraction of tempered martensite, tempered bainite, and retained austenite in the steel sheet microstructure is denoted as X(%), and the total area fraction X(%) in one of the steel sheets that is the largest among the total area fractions X(%) in the steel sheets is defined as Xmax(%). A region that extends from a softest portion of the heat-affected zone of the weld formed in the steel sheet with Xmax to the base material is defined as a first region 4. The heat-affected zone microstructure in the first region 4 includes ferrite at an area fraction of 40% or less and one or two or more remaining microstructures selected from tempered martensite, tempered bainite, and retained austenite, and the width D (mm) of the first region 4 satisfies formula (1).

$$D \geq 2.40 \times \exp(-0.025 \times Xmax) \qquad (1)$$

Next, the "softest portion of the heat-affected zone" and the "region extending from the softest portion to the base material" will be described using Fig. 1.

First, the "softest portion of the heat-affected zone" will be described.

As shown in Fig. 1, the softest portion of the heat-affected zone 2 of the weld 3 means a position whose hardness is smallest in the heat-affected zone when the hardness is measured under the following conditions.

The hardness measurement region is as follows. An intersection of the boundary between the nugget 1 and the heat-affected zone 2 and a steel sheet faying surface 7 is denoted as a nugget edge portion E. A straight line obtained by moving a straight line passing through the nugget edge portion E and the center of the nugget 200 μm in the thickness direction of the steel sheet (the steel sheet with Xmax) is defined as a straight line A. Then a region on the straight line A and extending 3 mm from the nugget edge portion E in the direction toward the base material (i.e., a region of the nugget 1 extending outward 3 mm from the nugget edge portion E) is defined as a region for the measurement of the hardness of the heat-affected zone 2 (a hardness measurement region 8). Specifically, a region indicated by a thick arrow in Fig. 1 is used as the hardness measurement region 8. The conditions for the hardness measurement are a measurement load of 300 g and a measurement interval of 150 μm, and a Vickers hardness test in JIS Z 2244 is used to measure the hardness in the hardness measurement region 8.

The graph in Fig. 1 shows the relation between the distance (mm) from the nugget edge portion E and the Vickers hardness (HV) measured by the method described above in a "region extending 1 mm from the nugget edge portion E in the direction toward the center of the nugget" and in the hardness measurement region 8. In the graph in Fig. 1, the position at which the Vickers hardness is smallest in the heat-affected zone is the "softest portion of the heat-affected zone."

Next, the "region extending from the softest portion to the base material" will be described.

As shown in Fig. 1, the region from the softest portion of the heat-affected zone 2 to the base material is the first region 4. The first region 4 is a region in the heat-affected zone 2 that, when the hardness is measured by the method described above, extends from the indentation point for the softest portion to the indentation point at which the hardness is 95% or more of the hardness of the base material. The width D of the first region 4 is the length between these two indentation points.

In the example shown in Fig. 1, the two steel sheets 5 and 6 overlap each other. X(%) in the steel sheet microstructure of the steel sheet disposed on the upper side (the upper steel sheet) 5 is compared with X(%) in the steel sheet microstructure of the steel sheet disposed on the lower side (the lower steel sheet) 6. Specifically, the total area fraction X(%) of tempered martensite, tempered bainite, and retained austenite in the upper steel sheet 5 and that in the lower steel sheet 6 are compared with each other to identify the steel sheet with the highest total value X. In the example in Fig. 1, the total value X in the lower steel sheet 6 is Xmax. Therefore, a region in the heat-affected zone 2 that is located on the lower steel sheet side within the weld 3 and extends from the softest portion to the base material (a solid filled region in the heat-affected zone in Fig. 1) is the "first region 4."

Next, the technical idea of the invention will be described in detail.

The reason that the weld microstructure described above can prevent the occurrence of delayed fracture of the weld has not been fully understood. However, the inventors think that the reason is as follows.

As described above, the behavior of hydrogen accumulation in the nugget edge portion that serves as a fracture origin of delayed fracture may be influenced not only by the microstructure of the nugget but also by the formation state of the heat-affected zone microstructure. The hydrogen storage capacity of the ferrite microstructure is smaller than those of tempered martensite, tempered bainite, and retained austenite. Hydrogen entering the weld is trapped in the nugget and also in the heat-affected zone. If the hydrogen storage capacity of the heat-affected zone is larger, a larger amount of hydrogen is trapped in the heat-affected zone, and therefore the amount of hydrogen trapped in the nugget is small.

Therefore, as for the intrusion of hydrogen into the weld during welding and in the use environment after the welding, the larger the hydrogen storage capacity of the heat-affected zone, the smaller the amount of hydrogen entering the nugget. This may allow the accumulation of hydrogen in the nugget edge portion serving as a fracture origin to be reduced.

Specifically, when the area fraction of ferrite whose hydrogen storage capacity is smaller is reduced and the total area fraction of tempered martensite, tempered bainite, and retained austenite whose hydrogen storage capacities are lager is increased in the heat-affected zone, the effect of suppressing delayed fracture of the weld may be increased. However, even when the total area fraction of tempered martensite, tempered bainite, and retained austenite is relatively small, the hydrogen storage capacity of the heat-affected zone can be increased by increasing the width of the heat-affected zone (i.e., the width D of the first region) according to the total area fraction. This may prevent delayed fracture of the weld.

In the present invention, because of the reason described above, it is important to control the heat-affected zone microstructure in the region extending from the softest portion to the base material (first region) within the heat-affected zone and to control the width of the first region.

<Heat-affected zone microstructure in first region>

Ferrite: area fraction of 40% or less (including 0%)

In the welded joint of the invention, the area fraction of ferrite in the first region is 40% or less. If the area fraction of ferrite in the first region exceeds 40%, it is difficult to increase the hydrogen storage capacity even when the width D of the first region is increased, and the effect of suppressing delayed fracture cannot be obtained. The area fraction of ferrite in the first region is more preferably 35% or less and still more preferably 30% or less.

No particular limitation is imposed on the lower limit of the area fraction of ferrite in the first region. As described above, the larger the hydrogen storage capacity of the heat-affected zone, the larger the amount of hydrogen the heat-affected zone can trap. Therefore, even when the area fraction of ferrite in the first region is 0%, the operational effects of the invention can be obtained. The area fraction of ferrite is preferably 0% or more and more preferably 5% or more.

Remaining microstructure: one or two or more selected from tempered martensite, tempered bainite, and retained austenite

As described above, by increasing the total area fraction of tempered martensite, tempered bainite, and retained austenite whose hydrogen storage capacities are large, the effect of suppressing delayed fracture of the weld increases. For this reason, the total area fraction of one or two or more selected from tempered martensite, tempered bainite, and retained austenite that are remaining microstructures is preferably 60% or more. The total area fraction of the remaining microstructures is more preferably 70% or more. The total area fraction of the remaining microstructures may be 100%.

<Width D of first region>

As described above, in the welded joint of the invention, the hydrogen storage capacity of the heat-affected zone is large, and therefore the effect of preventing delayed fracture can be obtained.

To obtain this effect, it is necessary that the first region have the heat-affected zone microstructure described above and also that the width D (mm) of the first region satisfy formula (1). This is because, if the width D does not satisfy formula (1), the width D of the first region is excessively small, so that the effect of a large amount of hydrogen trapped in the heat-affected zone tends not to be obtained. The width D of the first region is preferably $D \geq 2.80 \times \exp(-0.025 \times Xmax)$.

No particular limitation is imposed on the upper limit of the width D of the first region. From the viewpoint of preventing the properties other than the delayed fracture such as joint strength from being reduced, the width D of the first region is preferably 1.5 mm or less.

When two or more overlapping steel sheets having different chemical compositions and different tensile strengths are joined together by welding, different heat-affected zone microstructures are formed in the respective steel sheets included in the welded joint. The "width D of the first region" in this case is the width of the region extending from the softest portion to the base material in the weld formed in the steel sheet with Xmax.

Next, an embodiment of a method for producing the welded joint of the invention will be described.

The welded joint of the invention includes a preparation step of disposing two or more steel sheets so as to overlap each other to prepare a sheet set and a resistance spot welding step of holding the sheet set between a pair of welding electrodes and energizing the sheet set under the application of pressure to thereby form a resistance spot weld. In this manner, the two or more overlapping steel sheets are joined together, and a welded joint can thereby be produced.

[Preparation step]

In this step, two or more steel sheets are disposed so as to overlap each other to prepare a sheet set. For example, as shown in Fig. 1, two steel sheets 5 and 6 are disposed so as to overlap each other to prepare a sheet set. The steel sheets have been described above, and their description will be omitted.

[Resistance spot welding step]

Next, the resistance spot welding step is performed. In this step, the sheet set is held between a pair of welding electrodes disposed on the lower and upper sides of the sheet set and energized under the application of pressure while the energization is controlled such that prescribed welding conditions are obtained. In this manner, a weld 3 in the invention is formed at a sheet gap forming the steel sheet faying surface 7 of the steel sheets 5 and 6, and the steel sheets can thereby be joined together (see Fig. 1).

As described above, in the weld 3 in the invention, it is important that, in order for the width D of the first region 4 to satisfy formula (1) while the heat-affected zone microstructure in the first region is taken into consideration, energization during welding (i.e., energization in the resistance spot welding step) be divided into a primary energization step and a secondary energization step and that a current value Ip and an energization time tp in the secondary energization step be appropriately controlled.

Specifically, the resistance spot welding step includes the primary energization step and the secondary energization step. In the secondary energization step, energization is performed under the conditions that the current value Ip (kA) and the energization time tp (ms) satisfy the following formulas (2) and (3), respectively.

$$0.4 \times Im \leq Ip \leq 1.1 \times Im \qquad (2)$$

$$1000 - (8 \times Xmax) \leq tp \qquad (3)$$

Here, Im in formula (2) is the current value (kA) in the primary energization step, and Xmax in formula (3) is the value of X of one of the steel sheets that is the largest among the total area fractions X(%) in the steel sheets, X(%) in each steel sheet being the total area fraction of tempered martensite, tempered bainite, retained austenite in the steel sheet microstructure of the each steel sheet.

In the present invention, to obtain the effects of the secondary energization step more stably, a cooling step may be provided between the primary energization step and the secondary energization step.

<Primary energization step>

In the primary energization step, while the sheet set is held between the pair of welding electrodes under the application of pressure, energization is performed at the current value Im to form a nugget. In the example shown in Fig. 1, while the overlapping steel sheets 5 and 6 (i.e., the sheet set) are held between the pair of welding electrodes (not illustrated), the sheet set is energized under the application of pressure, and the nugget 1 having the required size is formed between the sheets by resistance heating.

As for the current value and energization time in the primary energization step, welding conditions may be appropriately selected such that the diameter of the nugget formed through the secondary energization step falls within an intended nugget diameter range. In the present invention, from the viewpoint that the above-described steel sheets are used for the sheet set, the resistance spot welding conditions in the primary energization step are preferably a current value Im of 3 to 15 kA and an energization time tm of 100 to 1500 ms. The welding force is preferably 2 to 10 kN.

<Cooling step> (optional step)

When the cooling step is provided, the cooling step is performed after the primary energization step but before the secondary energization step. By performing the cooling step, the contact state at the steel sheet faying surface and the temperature distribution therein after the primary energization step are stabilized, and the heat input in the secondary energization step can be controlled stably. To obtain this operational effect, it is preferable that, in the cooling step, a non-energization state is maintained for a cooling time tc of 20 ms or longer and 1000 ms or shorter. The cooling time tc is more preferably 40 ms or longer. The cooling time tc is more preferably 600 ms or shorter, still more preferably 400 ms or shorter, and yet more preferably 100 ms or shorter.

<Secondary energization step>

After the primary energization step, the secondary energization step is performed. When the cooling step is provided, the secondary energization step is performed after the cooling step. In the secondary energization step, the energization is performed for the purpose of controlling the width D of the first region. If the secondary energization step is not performed, the width D of the first region formed may be insufficient. It is therefore important to appropriately control the current value Ip (kA) and the energization time tp (ms).

If the current value Ip in the secondary energization step is $0.4 \times Im > Ip$ or the energization time tp in the secondary energization step is $1000 - (8 \times Xmax) > tp$, the heat input is insufficient, and the effect of increasing the width D of the first region may not be obtained. If the current value Ip in the secondary energization step is $Ip > 1.1 \times Im$, the heat input is excessively large. In this case, the nugget is re-melted, and splashes are formed. Therefore, the heat input is unstable, and the width D of the first region cannot be increased effectively in some cases.

For the reasons described above, the current value Ip in the secondary energization step is set to be equal to or more than $(0.4 \times Im)$ kA and equal to or less than $(1.1 \times Im)$ kA, and the energization time tp in the secondary energization step is set to be equal to or longer than $(1000 - (8 \times Xmax))$ ms. The current value Ip in the secondary energization step is preferably equal to or more than $(0.6 \times Im)$ kA and is preferably equal to or less than $(1.05 \times Im)$ kA. The energization time tp in the secondary energization step is preferably equal to or longer than $(1000 - (7.5 \times Xmax))$ ms. The energization time tp in the secondary energization step is preferably equal to or shorter than 2000 ms and more preferably equal to or shorter than 1600 ms.

Even when the current value Ip and the energization time tp in the secondary energization step are within the above ranges, the heat-affected zone microstructure in the first region cannot be controlled within the above numerical ranges in some cases due to the influence of the steel sheet microstructure of the base material, so that the width D of the first region becomes excessively large. The reason for this is that the heat-affected zone microstructure in the first region is influenced by the area fractions of the microstructures of the steel sheets used for the sheet set (i.e., the steel sheet microstructures of the base materials). Therefore, to obtain the effects of the invention more stably, it is preferable to adjust the steel sheet microstructures of the base materials to prescribed microstructures. For example, as for the steel sheet microstructures of the base materials, it is preferable that at least one steel sheet of the steel sheets forming the sheet set includes ferrite at an area fraction of 40% or less and one or two or more remaining microstructures selected from tempered martensite, tempered bainite, and retained austenite.

The conditions for the welding force in the secondary energization step can be appropriately selected such that the above operational effects can be obtained. Preferably, the welding force in the secondary energization step is in the range of 1 to 10 kN.

No particular limitation is imposed on the structure of the apparatus for performing the resistance spot welding in the invention, so long as the upper and lower electrodes are used for pressurization while the welding force is controlled. For example, an apparatus such as an air cylinder or a servo motor can be used. No particular limitation is imposed on the mechanism for controlling the current value, and the present invention is applicable to both DC and AC. When AC is used, the "current" means the "effective current."

No particular limitation is imposed on the tip type of the upper and lower electrodes. Examples of the tip type include a DR type (dome radius type), an R type (radius type), and a D type (dome type) specified in JIS C9304: 1999. The tip diameter of each electrode is, for example, 4 mm to 16 mm. The radius of curvature of the tip of each electrode is, for example, 10 mm to 400 mm. Flat electrodes having flat tip ends may also be used.

In the above description, the case where the two overlapping steel sheets are resistance-spot-welded has been mainly described. However, the present invention is also applicable to the case where three or more overlapping steel sheets are welded, and the above operational effects can also be obtained in this case.

EXAMPLES

The operations and effects of the present invention will be described by way of Examples. However, the present invention is not limited to the following Examples.

Steel sheets having equivalent carbon contents and thicknesses shown in Table 1-1 were used. First, the steel sheets were heat-treated under appropriate conditions to produce steel sheets having different steel sheet microstructures (steel sheets A to J shown in Table 1-1).

Next, two steel sheets were selected from the obtained steel sheets and stacked in an order shown in Table 1-2 to prepare a sheet set (the preparation step). The sheet set was held between a pair of welding electrodes, and resistance spot welding was performed under welding conditions shown in Table 1-2 while the sheet set was pressed using the welding electrodes to thereby produce a welded joint (the resistance spot welding step). In the "Welding force" column shown in Table 1-2, the welding force during the resistance spot welding step is shown. The resistance spot welding was performed at room temperature, and the pair of welding electrodes were water-cooled constantly. As for the welding electrodes, the lower and upper electrodes were each a chromium-copper-made DR-type electrode having a tip with a diameter (tip diameter) of 6 mm and a radius of curvature of 40 mm. A servo-type resistance spot welder was used for welding, and a DC current was supplied during energization.

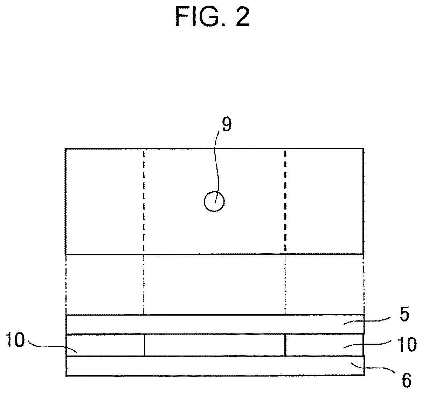

Fig. 2 shows a welding test specimen including overlapping steel sheets for resistance spot welding. The upper drawing in Fig. 2 is a plan view of the welding test specimen, and the lower drawing is a side view of the welding test specimen. As shown in Fig. 2, two steel sheets produced from any of the steel sheets described above and having a short-side length of 30 mm and a long-side length of 100 mm (i.e., the upper steel sheet 5 and the lower steel sheet 6) and two spacers 10 having a thickness of 1.8 mm, a long-side length of 30 mm, and a short-side length of 25 mm were prepared. The spacers 10 were sandwiched between the upper steel sheet 5 and the lower steel sheet 6 at opposite ends of the two steel sheets 5 and 6 to prepare the welding test specimen, and the center of the welding test specimen was resistance-spot-welded under welding conditions shown in Table 1-2 to form a weld 9. The welding conditions shown in Table 1-2 were adjusted such that the diameter of the nugget formed through the secondary energization step was 3.5^t mm. Here, "t" is the thickness (mm) of a steel sheet having the smallest thickness in the sheet set. Four welding test specimens were produced for each test specimen number.

The welding test specimens obtained were used to evaluate the weld and the delayed fracture resistance.

(1) Evaluation of weld

The width D of the first region and the heat-affected zone microstructure in the first region were evaluated.

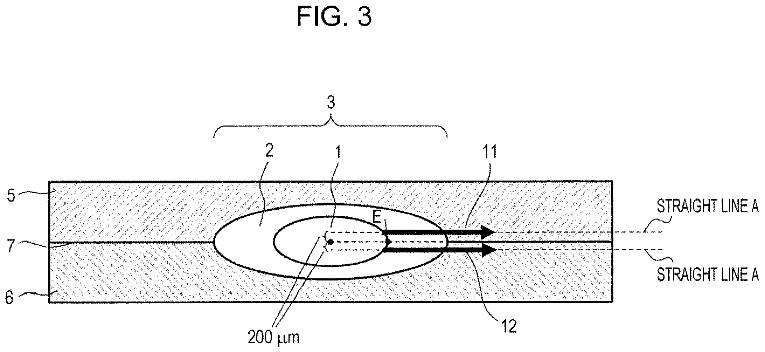

One of the four welding test specimens produced was cut along a plane passing through the center of the weld. Fig. 3 shows a cross section in the thickness direction of the welding test specimen. As shown in Fig. 3, regions that are located on straight lines A spaced 200 $\mu$m in the thickness direction of the steel sheets from a straight line passing through the nugget edge portion E and the center of the nugget and that extend 3 mm from the nugget edge portion E to the outside of the nugget 1 (regions indicated by thick arrows in Fig. 3) are defined as hardness measurement regions 11 and 12. The hardness measurement conditions are a measurement load of 300 g and a measurement interval of 150 $\mu$m, and the hardness was measured using a Vickers hardness test described in JIS Z 2244. The indentation point for the softest portion and the indentation point at which the hardness was 95% or more of the hardness of the base material were determined as described above, and a region between these two indentation points within the heat-affected zone was defined as the first region. Then the width D of the first region was computed (see Fig. 1). The value obtained is shown in Table 2.

The heat-affected zone microstructure in the first region was observed under an SEM at the center of the calculated width D of the first region, and the area fractions of microstructures (i.e., ferrite and remaining microstructures) were calculated. As for the remaining microstructures, the total value of the area fractions of the microstructures was determined. The obtained area fractions and the types of remaining microstructures are shown in Table 2.

The hardness measurement and the SEM observation were performed in the heat-affected zone in the steel sheet with Xmax. When the upper steel sheet 5 is the "steel sheet with Xmax" as shown in Fig. 3, the hardness measurement and the SEM observation were performed in the thick arrow region in the upper steel sheet (i.e., the hardness measurement region 11). When the lower steel sheet 6 is the "steel sheet with Xmax," the hardness measurement and the SEM observation were performed in the thick arrow region in the lower steel sheet (i.e., the hardness measurement region 12).

(2) Evaluation of delayed fracture resistance

The remaining three welding test specimens were immersed in an aqueous ammonium thiocyanate solution with a concentration of 1.5% to allow hydrogen to enter the weld, and then the presence or absence of the occurrence of delayed fracture was observed. As for the judgment of delayed fracture, a test specimen in which separation of the nugget (i.e., separation of the nugget into two pieces at the joint interface) was visually observed after welding was evaluated as having undergone delayed fracture. A test specimen with no separation of the nugget observed was evaluated as having no delayed fracture. A test with n3 was performed for each test specimen number, and the observation results are shown in the "Evaluation of delayed fracture" column in Table 2 as follows.

When no delayed fracture occurred in all the n3 test specimens, the symbol "○" was assigned. When no delayed fracture occurred in n2 test specimens and delayed fracture occurred in an n1 test specimen, the symbol "△" was assigned. When the number of test specimens with no delayed fracture was n1 or less, the symbol "×" was assigned. Welded joints with the symbol "○" or "△" were rated good.

[Table 1-1]

| Steel sheet | Steel sheet microstructure | | | | Carbon equivalent Ceq (%) | Thickness (mm) | Tensile strength (MPa) | Type |
|---|---|---|---|---|---|---|---|---|
| | Ferrite (area %) | Tempered martensite (area %) | Tempered bainite (area %) | Retained austenite (area %) | | | | |
| A | 35 | 65 | 0 | 0 | 0.43 | 1.6 | 1470 | Cold rolled steel sheet |
| B | 5 | 80 | 0 | 15 | 0.43 | 1.6 | 1180 | Cold rolled steel sheet |
| C | 5 | 95 | 0 | 0 | 0.43 | 1.6 | 1470 | Cold rolled steel sheet |

(continued)

| Steel sheet | Steel sheet microstructure | | | | Carbon equivalent Ceq (%) | Thickness (mm) | Tensile strength (MPa) | Type |
|---|---|---|---|---|---|---|---|---|
| | Ferrite (area %) | Tempered martensite (area %) | Tempered bainite (area %) | Retained austenite (area %) | | | | |
| D | 45 | 55 | 0 | 0 | 0.43 | 1.6 | 1180 | Cold rolled steel sheet |
| E | 15 | 75 | 0 | 10 | 0.38 | 1.2 | 980 | GA |
| F | 20 | 60 | 20 | 0 | 0.38 | 1.8 | 1320 | GA |
| G | 30 | 70 | 0 | 0 | 0.40 | 2.0 | 1320 | GI |
| H | 0 | 100 | 0 | 0 | 0.43 | 1.6 | 1470 | Cold rolled steel sheet |
| I | 5 | 70 | 20 | 5 | 0.45 | 1.4 | 1470 | Cold rolled steel sheet |
| J | 40 | 60 | 0 | 0 | 0.41 | 1.6 | 1180 | Cold rolled steel sheet |
| *1: Ceq = C + Si 130 + Mn /20 + 2P + 4S | | | | | | | | |

[Table 1-2]

| Test specimen number | Sheet set | | Welding force (kN) | Primary energization step | | Cooling step | Secondary energization step | | Steel sheet with Xmax | Xmax (%) | 1000 - (8 × Xmax) | Remarks |
|---|---|---|---|---|---|---|---|---|---|---|---|---|
| | Upper steel sheet | Lower steel sheet | | Current value Im (kA) | Energization time tm (ms) | Cooling time tc (ms) | Current value Ip (kA) | Energization time tp (ms) | | | | |
| 1 | A | A | 4.0 | 5.1 | 300 | - | 4.2 | 600 | A | 65 | 480 | Inventive Example |
| 2 | A | A | 4.0 | 5.1 | 300 | - | 2.0 | 600 | A | 65 | 480 | Comparative Example |
| 3 | A | A | 4.0 | 5.1 | 300 | - | 4.0 | 300 | A | 65 | 480 | Comparative Example |
| 4 | A | A | 4.0 | 5.1 | 300 | - | - | - | A | 65 | 480 | Comparative Example |
| 5 | A | B | 4.0 | 5.1 | 300 | 20 | 4.0 | 300 | B | 95 | 240 | Inventive Example |
| 6 | C | C | 4.0 | 5.1 | 300 | 60 | 4.5 | 400 | C | 95 | 240 | Inventive Example |
| 7 | C | C | 4.0 | 5.1 | 300 | 60 | 5.8 | 260 | C | 95 | 240 | Comparative Example |
| 8 | A | D | 4.0 | 5.1 | 300 | 60 | 4.5 | 700 | A | 65 | 480 | Inventive Example |
| 9 | C | D | 4.0 | 5.1 | 300 | 40 | 4.0 | 300 | C | 95 | 240 | Inventive Example |
| 10 | D | D | 4.0 | 5.1 | 300 | - | 4.0 | 700 | D | 55 | 560 | Comparative Example |
| 11 | F | F | 4.5 | 5.7 | 360 | 80 | 4.6 | 500 | F | 80 | 360 | Inventive Example |
| 12 | F | F | 4.5 | 5.7 | 360 | - | 4.0 | 500 | F | 80 | 360 | Inventive Example |
| 13 | F | F | 4.5 | 5.1 | 360 | - | - | - | F | 80 | 360 | Comparative Example |

EP 4 434 667 A1

12

(continued)

| Test specimen number | Sheet set | | Welding force (kN) | Primary energization step | | Cooling step | Secondary energization step | | Steel sheet with Xmax | Xmax (%) | 1000 - (8 × Xmax) | Remarks |
|---|---|---|---|---|---|---|---|---|---|---|---|---|
| | Upper steel sheet | Lower steel sheet | | Current value Im (kA) | Energization time tm (ms) | Cooling time tc (ms) | Current value Ip (kA) | Energization time tp (ms) | | | | |
| 14 | E | E | 4.5 | 5.5 | 260 | 40 | 5.0 | 400 | E | 85 | 320 | Inventive Example |
| 15 | G | G | 5.0 | 5.8 | 400 | - | 5.5 | 460 | G | 70 | 440 | Inventive Example |
| 16 | G | G | 5.0 | 5.8 | 400 | - | 2.0 | 600 | G | 70 | 440 | Comparative Example |
| 17 | H | H | 4.0 | 5.1 | 300 | 700 | 5.1 | 1200 | H | 100 | 200 | Inventive Example |
| 18 | H | H | 4.0 | 5.1 | 300 | 40 | 4.2 | 1600 | H | 100 | 200 | Inventive Example |
| 19 | F | H | 4.0 | 5.4 | 300 | 40 | 4.4 | 600 | H | 100 | 200 | Inventive Example |
| 20 | C | C | 4.0 | 5.1 | 300 | 550 | 4.5 | 1000 | C | 95 | 240 | Inventive Example |
| 21 | I | I | 4.5 | 5.2 | 340 | 40 | 5.0 | 600 | C | 95 | 240 | Inventive Example |
| 22 | H | H | 4.0 | 5.1 | 300 | 400 | 5.1 | 800 | H | 100 | 200 | Inventive Example |
| 23 | J | J | 4.0 | 5.2 | 300 | 100 | 4.8 | 800 | J | 60 | 520 | Inventive Example |
| 24 | D | D | 4.0 | 5.1 | 300 | - | 4.0 | 900 | D | 55 | 560 | Comparative Example |

[Table 2]

| Test specimen number | Sheet set | | Steel sheet with Xmax | Xmax (%) | 2.40 × exp(-0.025 × Xmax) | Width D of first region (mm) | Suitability of formula (1) | Heat-affected zone microstructure in first region | | | Evaluation of delayed fracture | Remarks |
|---|---|---|---|---|---|---|---|---|---|---|---|---|
| | Upper steel sheet | Lower steel sheet | | | | | | Area fraction of ferrite (%) | Remaining microstructure | | | |
| | | | | | | | | | Type (*1) | Total area fraction (%) | | |
| 1 | A | A | A | 65 | 0.47 | 0.54 | ○ | 35 | Tempered M | 65 | △ | Inventive Example |
| 2 | A | A | A | 65 | 0.47 | 0.20 | × | 35 | Tempered M | 65 | × | Comparative Example |
| 3 | A | A | A | 65 | 0.47 | 0.35 | × | 35 | Tempered M | 65 | × | Comparative Example |
| 4 | A | A | A | 65 | 0.47 | 0.20 | × | 35 | Tempered M | 65 | × | Comparative Example |
| 5 | A | B | B | 95 | 0.22 | 0.35 | ○ | 5 | Tempered M, Retained γ | 95 | ○ | Inventive Example |
| 6 | C | C | C | 95 | 0.22 | 0.35 | ○ | 5 | Tempered M | 95 | ○ | Inventive Example |
| 7 | C | c | C | 95 | 0.22 | 0.20 | × | 5 | Tempered M | 95 | × | Comparative Example |
| 8 | A | D | A | 65 | 0.47 | 0.58 | ○ | 35 | Tempered M | 65 | ○ | Inventive Example |
| 9 | C | D | C | 95 | 0.22 | 0.34 | ○ | 5 | Tempered M | 95 | ○ | Inventive Example |
| 10 | D | D | D | 55 | 0.61 | 0.50 | × | 45 | Tempered M | 55 | × | Comparative Example |
| 11 | F | F | F | 80 | 0.32 | 0.52 | ○ | 20 | Tempered M, Tempered B | 80 | ○ | Inventive Example |
| 12 | F | F | F | 80 | 0.32 | 0.35 | ○ | 20 | Tempered M, Tempered B | 80 | △ | Inventive Example |

| Test specimen number | Sheet set | | Steel sheet with Xmax | Xmax (%) | 2.40 × exp(-0.025 × Xmax) | Width D of first region (mm) | Suitability of formula (1) | Heat-affected zone microstructure in first region | | | Evaluation of delayed fracture | Remarks |
|---|---|---|---|---|---|---|---|---|---|---|---|---|
| | Upper steel sheet | Lower steel sheet | | | | | | Area fraction of ferrite (%) | Remaining microstructure | | | |
| | | | | | | | | | Type (*1) | Total area fraction (%) | | |
| 13 | F | F | F | 80 | 0.32 | 0.25 | × | 20 | Tempered M, Tempered B | 80 | × | Comparative Example |
| 14 | E | E | E | 85 | 0.29 | 0.40 | ○ | 15 | Tempered M, Retained γ | 85 | ○ | Inventive Example |
| 15 | G | G | G | 70 | 0.42 | 0.45 | ○ | 30 | Tempered M | 70 | Δ | Inventive Example |
| 16 | G | G | G | 70 | 0.42 | 0.30 | × | 30 | Tempered M | 70 | × | Comparative Example |
| 17 | H | H | H | 100 | 0.20 | 1.30 | ○ | 0 | Tempered M | 100 | ○ | Inventive Example |
| 18 | H | H | H | 100 | 0.20 | 0.80 | ○ | 0 | Tempered M | 100 | ○ | Inventive Example |
| 19 | F | H | H | 100 | 0.20 | 0.80 | ○ | 0 | Tempered M | 100 | ○ | Inventive Example |
| 20 | C | c | C | 95 | 0.22 | 0.75 | ○ | 5 | Tempered M | 95 | ○ | Inventive Example |
| 21 | I | I | I | 95 | 0.22 | 0.50 | ○ | 5 | Tempered M, Tempered B, Retained γ | 95 | ○ | Inventive Example |
| 22 | H | H | H | 100 | 0.20 | 1.10 | ○ | 0 | Tempered M | 100 | ○ | Inventive Example |
| 23 | J | J | J | 60 | 0.54 | 0.80 | ○ | 40 | Tempered M | 60 | ○ | Inventive Example |

| Test specimen number | Sheet set | | Steel sheet with Xmax | Xmax (%) | $2.40 \times \exp(-0.025 \times Xmax)$ | Width D of first region (mm) | Suitability of formula (1) | Heat-affected zone microstructure in first region | | | Evaluation of delayed fracture | Remarks |
|---|---|---|---|---|---|---|---|---|---|---|---|---|
| | Upper steel sheet | Lower steel sheet | | | | | | Area fraction of ferrite (%) | Remaining microstructure | | | |
| | | | | | | | | | Type (*1) | Total area fraction (%) | | |
| 24 | D | D | D | 55 | 0.61 | 0.65 | ○ | 45 | Tempered M | 55 | × | Comparative Example |

*1. Tempered M: Tempered martensite, Tempered B: Tempered bainite, Retained $\gamma$;Retained austenite

As is clear from Table 2, in the Inventive Examples, no delayed fracture occurred in n2 or more test specimens, and good welded joints were obtained. However, in the Comparative Examples, delayed fracture occurred in n2 or less test specimens, and good welded joints were not obtained.

Reference Signs List

| | |
|---|---|
| 1 | nugget |
| 2 | heat-affected zone |
| 3 | resistance spot weld |
| 4 | first region |
| 5 | upper steel sheet |
| 6 | lower steel sheet |
| 7 | steel sheet faying surface |
| 8 | hardness measurement region |
| 9 | weld |
| 10 | spacer |
| 11, 12 | hardness measurement region |

**Claims**

1. A resistance spot welded joint comprising a resistance spot weld formed by resistance-spot-welding two or more steel sheets,

   wherein at least one of the steel sheets has a tensile strength of 980 MPa or more,
   wherein, in each of the steel sheets, the total area fraction of tempered martensite, tempered bainite, and retained austenite in a steel sheet microstructure is denoted as X(%), wherein the total area fraction X(%) in one of the steel sheets that is the largest among the total area fractions X(%) in the steel sheets is defined as Xmax(%),
   wherein a region that extends from a softest portion of a heat-affected zone of the resistance spot weld formed in the steel sheet with Xmax to a base material is defined as a first region,
   wherein a heat-affected zone microstructure in the first region includes ferrite at an area fraction of 40% or less and one or two or more remaining microstructures selected from tempered martensite, tempered bainite, and retained austenite, and
   wherein the first region has a width D (mm) satisfying formula (1):

$$D \geq 2.40 \times \exp(-0.025 \times Xmax). \qquad (1)$$

2. The resistance spot welded joint according to claim 1, wherein, in each of the steel sheets, Ceq represented by formula (4) is 0.25% or more:

$$Ceq = C + Si / 30 + Mn / 20 + 2P + 4S, \qquad (4)$$

   where element symbols in formula (4) represent the contents (% by mass) of respective elements.

3. A method for producing the resistance spot welded joint according to claim 1 or 2,

   the method comprising: a preparation step of disposing the two or more steel sheets so as to overlap each other to prepare a sheet set; and a resistance spot welding step of holding the sheet set between a pair of welding electrodes and energizing the sheet set under application of pressure to form the resistance spot weld,
   wherein the resistance spot welding step includes a primary energization step and a secondary energization step,
   wherein, in the secondary energization step, the sheet set is energized under conditions in which a current value Ip (kA) and an energization time tp (ms) satisfy formula (2) and formula (3), respectively:

$$0.4 \times Im \leq Ip \leq 1.1 \times Im, \qquad (2)$$

$$1000 - (8 \times Xmax) \leq tp, \qquad (3)$$

where Im in formula (2) is a current value (kA) in the primary energization step, and Xmax in formula (3) is X(%) in one of the steel sheets that is the largest among the total area fractions X(%) in the steel sheets, X(%) in each steel sheet being the total area fraction of tempered martensite, tempered bainite, retained austenite in the steel sheet microstructure of the each steel sheet.

4. The method for producing the resistance spot welded joint according to claim 3, the method further comprising, after the primary energization step, a cooling step,
wherein, in the cooling step, a non-energization state is maintained for 20 ms or longer and 1000 ms or shorter.

FIG. 1

EP 4 434 667 A1

FIG. 2

# FIG. 3

## INTERNATIONAL SEARCH REPORT

International application No.

**PCT/JP2023/004140**

| A. | CLASSIFICATION OF SUBJECT MATTER |
| --- | --- |

*B23K 11/11*(2006.01)i; *B23K 11/16*(2006.01)i; *B23K 11/24*(2006.01)i; *C22C 21/02*(2006.01)i
FI:  B23K11/11 540; B23K11/16; B23K11/24 315; C22C21/02

According to International Patent Classification (IPC) or to both national classification and IPC

| B. | FIELDS SEARCHED |
| --- | --- |

Minimum documentation searched (classification system followed by classification symbols)

B23K11/11; B23K11/16; B23K11/24; C22C21/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2019/230580 A1 (NIPPON STEEL CORPORATION) 05 December 2019 (2019-12-05) claims 1-10, fig. 1-6 | 1-4 |
| A | JP 2020-529921 A (APERAM) 15 October 2020 (2020-10-15) paragraphs [0034]-[0046], fig. 1-5 | 1-4 |
| A | WO 2014/025063 A1 (NIPPON STEEL & SUMITOMO METAL CORPORATION) 13 February 2014 (2014-02-13) claims 1-14, fig. 6-21 | 1-4 |
| A | WO 2020/036198 A1 (JFE STEEL CORP) 20 February 2020 (2020-02-20) claims 1-3, fig. 1-5 | 1-4 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 April 2023** | **18 April 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/004140**

| Patent document cited in search report | | | Publication date (day/month/year) | Patent family member(s) | | | Publication date (day/month/year) |
|---|---|---|---|---|---|---|---|
| WO | 2019/230580 | A1 | 05 December 2019 | US claims 1-10, fig. 1-6 | 2021/0205915 | A1 | |
| | | | | EP | 3804899 | A1 | |
| | | | | CN | 112203793 | A | |
| JP | 2020-529921 | A | 15 October 2020 | US paragraphs [0115]-[0126], fig. 1-5 | 2020/0223008 | A1 | |
| | | | | WO | 2019/002924 | A1 | |
| | | | | CN | 110809632 | A | |
| | | | | KR | 10-2020-0027476 | A | |
| WO | 2014/025063 | A1 | 13 February 2014 | US claims 15-31, fig. 6-21 | 2015/0217396 | A1 | |
| | | | | CN | 104520052 | A | |
| | | | | KR | 10-2015-0023926 | A | |
| WO | 2020/036198 | A1 | 20 February 2020 | CN claims 1-3, fig. 1-5 | 112584959 | A | |
| | | | | KR | 10-2021-0033486 | A | |

Form PCT/ISA/210 (patent family annex) (January 2015)

**EP 4 434 667 A1**

**REFERENCES CITED IN THE DESCRIPTION**

**Patent documents cited in the description**

- JP 2015093282 A
- JP 2020049541 A